# EUROPEAN PATENT SPECIFICATION

(11) **EP 2 009 848 B1**
(45) Date of publication and mention of the grant of the patent: **11.11.2009**
(21) Application number: 07113585.9
(22) Date of filing: 01.08.2007
(51) Int. Cl.: H04L 12/56

(54) **Computing a path in a label switched network**
Berechnung eines Weges in einem etikettenvermittelten Netzwerk
Calcul d'un chemin dans un réseau à commutation d'étiquettes

(30) Priority: 29.06.2007 EP 07301181
(43) Date of publication of application: 31.12.2008
(73) Proprietor: Alcatel Lucent, 75008 Paris (FR)
(72) Inventor: Douville, Richard, 91310 Longpont sur Orge (FR); Le Sauze, Nicolas, 91440 Bures-sur-Yvette (FR)
(74) Representative: Knecht, Ulrich Karl

(56) References cited:
- US-A1- 2006 098 657
- FARREL OLD DOG CONSULTING J-P VASSEUR CISCO SYSTEMS A ET AL: "A Path Computation Element (PCE)-Based Architecture" IETF STANDARD, INTERNET ENGINEERING TASK FORCE, IETF, CH, August 2006 (2006-08), XP015047407 ISSN: 0000-0003
- JP VASSEUR ET AL: "Path Computation Element (PCE) communication Protocol (PCEP)" IETF STANDARD-WORKING-DRAFT, INTERNET ENGINEERING TASK FORCE, IETF, CH, vol. pce, no. 7, 2 March 2007 (2007-03-02), XP015049706 ISSN: 0000-0004
- SHIMAZAKI D ET AL: "Global Interoperability Trial for Next-Generation Photonic IP Network &#8211" COMMUNICATIONS, 2005 ASIA-PACIFIC CONFERENCE ON PERTH, WESTERN AUSTRALIA 03-05 OCT. 2005, PISCATAWAY, NJ, USA,IEEE, 3 October 2005 (2005-10-03), pages 695-699, XP010860873 ISBN: 0-7803-9132-2

## Description

### Field of the Invention

The present invention rotates to the field of telecommunications and more particularly to a method and apparatus for computing a path in a tablets switched network.

### Background of the invention

The IETF document RFC 4655 describes an architecture for a Path Computing Element (PCE)-based model, which addresses the problem space of path computation in large, multi-domain, multi-region or multi-layer networks. It distinguishes between stateful PCEs and stateless PCEs. According to RFC4655, there is a strict synchronization in the former case between the PCE and not only the network states in terms of topology and resource information, but also the set of.computed paths and reserved resources in use in the network.

Accordingly, in order to have an efficient stateful PCE, the PCE should know if the computed path has been used and consequently the related reserved resources. In particular when multiple PCEs are used for path computation in a network, a tight synchronization between the states stored in each PCE is required. This increases control plane traffic and requires complex mechanisms and computation resources.

The present solution for stateful PCEs is based on the routing protocol OSPF-TE to gather the network resources and their availability. However, it would be complicated to link modifications of the network resource availability with information about adoption or non-adoption of the proposed path solutions.

### Summary of the Invention

It is therefore an object of the present invention to provide a method and related apparatus for computing a path in a labels switched network, which is more efficient than known solutions but less complex to implement.

These and other objects are achieved by a method computing a path in a label switched network according to claim 1, a path computing element according to claim 7 and a path computation client according to claim 8.

In particular, according to the invention, a stateful path computing element stores in a traffic engineering database topology and resource information about the label switched network. The path computing element receives a path computation request from a path computation client and computes a path serving this path computation request using the typology and resource information. It transits then a path computation reply to the path computation client including the computed path. The path computation client returns then to the path computing element an acknowledgment indicating whether it has used the proposed path to set up a label switched path or not. This link state information can then be used by the path computing element for future path computations.

### Brief description of the drawings

A preferred embodiment of the present invention will now be described with reference to the accompanying drawings in which
- Fig. 1: shows a schematic diagram of a data network in which the present invention is applied;
- Fig. 2: shows the data network of claim 1 after a set-up of a label switched path;
- Fig. 3: shows a detailed schematic diagram of a Path Computing Element (PCE) in accordance with the present invention and comprised in the data network of Fig. 1; and
- Fig. 4: shows a schematic block diagram of a network element in accordance with the present invention.

### Detailed description

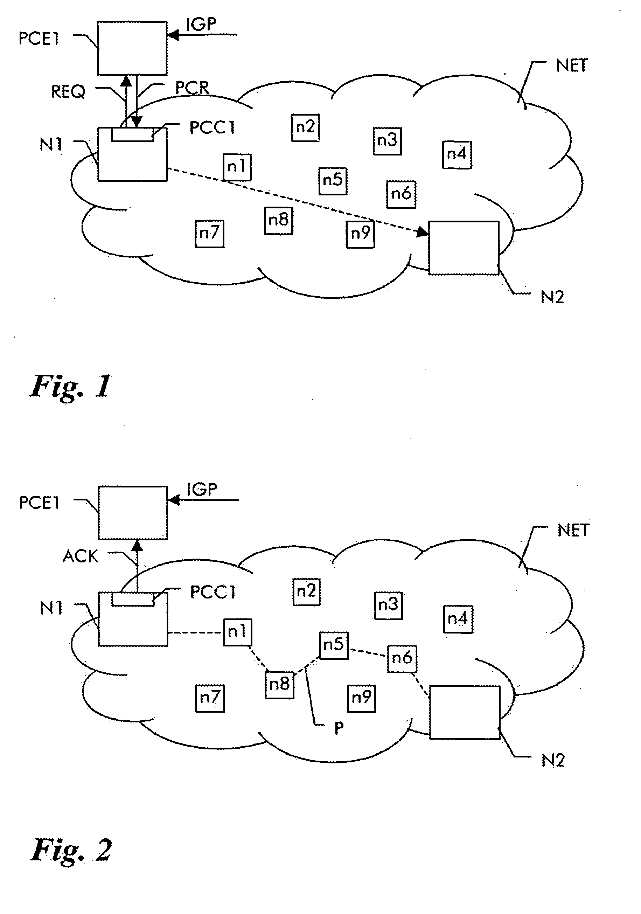

Fig. 1 shows a schematic diagram of a telecommunications network NET. It contains a first network node N1, a second network node N2 and number of intermediate network nodes. n1-n9.

In the context of the present invention telecommunications network NET can be identified with a label switched packet data network operated in accordance with the principles of Multiprotocol Label Switching (MPLS) or Generalised Multiprotocol Label Switching (GMPLS). Network paths are established as Label Switched Paths (LSPs) by means of an appropriate signalling protocol, as known to a person skilled in the art. A commonly known protocol which is appropriate in the context of the present invention is OSPF (Open Shortest Path First). OSPF uses a Link State Database (LSDB) or Traffic Engineering Database (TED) for routing purposes, wherein such database comprises information which reflect network topology.

In accordance with RFC 4655, which is incorporated by reference herein; path computation is performed by a Path Computing Element (PCEP), which is an entity, i.e., a component, on application, or a network node that is capable of computing a network path or route, based on network topology and resource information and applying computational constraints, as explained in detail in Section 3 of RFC 4655.

Network node N1 has a Path computation client (PCC) function PCC1, which is connected to a Path Computing Element PCE1. PCE1 is a stateful PCE, which means that it keeps in memory established LSPs and previous computed paths. PCE1 comprises a TED for path computing purposes.

Building said database and updating it in case of topology changes requires an exchange of routing information between elements of the telecommunications network NET. In accordance with the OSPF protocol, which more generally can be referred to as an Interior Gateway Protocol (IGP), the routing information are provided through flooding which occurs regularly based on on incompressible time interval in accordance with the IGP used (such as OSPF, IS-IS, RIP, or IGRP).

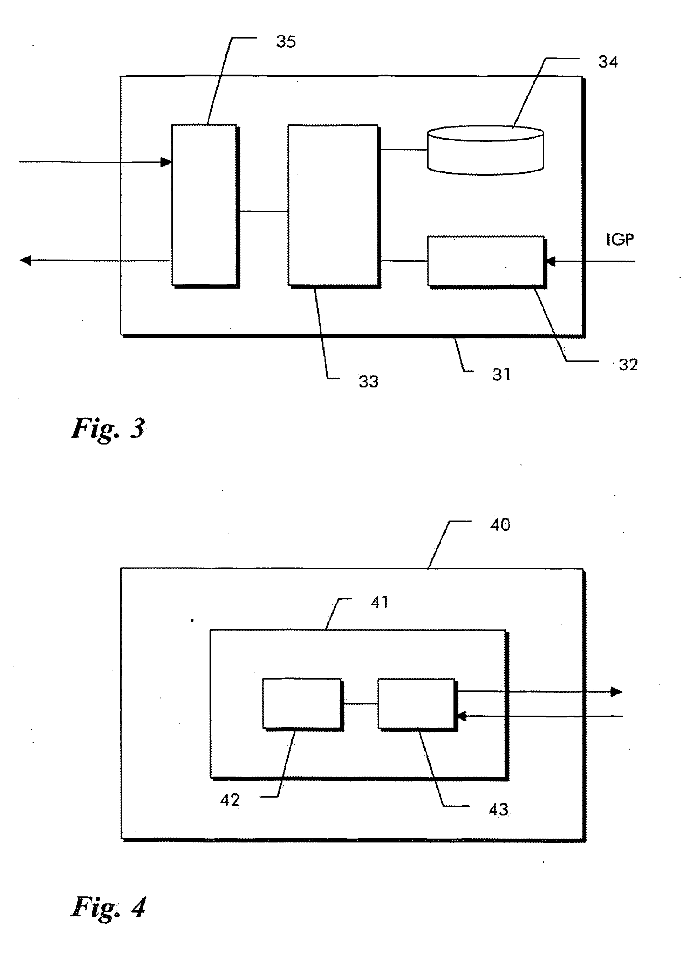

In figure 1, PCE1 receives network topology and resource usage information via protocol IGP from other network devices (not shown). A Traffic Engineering Database (TED) is implemented in PCE1 and the information received via IGP is used to populate this database, as will be explained in detail below with reference to appended figure 3. For path setup and resource reservation, network nodes N1, N2, and n1-n9 in figure 1 comprise respective signaling engines (not shown in Fig. 1), as will be explained in detail below with reference to appended Fig. 4.

Network node N1 is equipped with respective a Path computation client function PCC1, which can address Path Computation Element PCE1. When N1 whished to establish a path to network node N2, indicated as dashed arrow in figure 1, it sends a corresponding path computation request REQ from its PCC1 function to a PCE, which is by way of example in the present embodiment PCE1. It should be noted that in the general case, there can be more than one PCE and PCC1 can address different PCEs with requests. The choice of the addressed PCE for a particular computation request can be diverse and can depend for example on configuration , load status of the PCEs, network knowledge of the PCEs, security choice, routing optimization algorithms available on PCEs, etc.

PCE1 computes a path P using the topology and resource information in its TED and returns the computed path in a path computation reply PCR to PCC1.

After PCE1 has returned the computed path P, the resources used for this path should not be assigned again for another path computation request. On the other hand, it takes a while until the change in the available resource will be propagated through the IGP.

In figure 2, a computed path P is shown by way of example along the dashed line leading from N1 over routing nodes n1 - n8 - n5 - n6 to destination node N2. Path setup is initiated by network node N1 in a conventional manner using the RSVP (Resource reSerVation Protocol). However, N1 is not forced to use a computation result and establish the computed path or the establishment can fail. Therefore, according to a basic idea of the present invention, a direct communication between the PCE and the PCC is introduced. According to the invention, the PCC1 sends an acknowledgment ACK back to PCE1 indicating whether it has been used the computed path or not.

In a preferred embodiment, the acknowledgment is based on the existing protocol PCEP, i.e. the communication protocol between PCC and PCE. The PCEP is thus enhanced by a notification message (PCNtf message) to advertise a PCE that the path result sent to the PCC is used or not. This notification message will contain an Request Parameter (RP) object to refer to a particular path computation request. Such RP object is already existing in the PCEP notification protocol message as an option. In the preferred embodiment; a new NOTIFICATION object is defined. This is done by defining in the standard NOTIFICATION object structure a new Notification-type which specifies the class of notification. This class will be called herein "ERO path usage".

Moreover, two Notification-values are also defined providing the important addition information related to the nature of the notification i.e. usage "YES/ERO applied" or "NO/ERO not applied".

The RP object is specified in the context of PCEP by the IETF (see Internet Draft droft-ietf-pce-pcep-08.txt, which is incorporated by reference herein) and is used to specify various characteristics of the path computation request.

The NOTIFICATION object is exclusively carried within a PCNtf message and can either be used in a message sent by a PCC to a PCE or by a PCE to a PCC so as to notify of an event. The referred Internet Draft describes also the format of such NOTIFICATION objects:

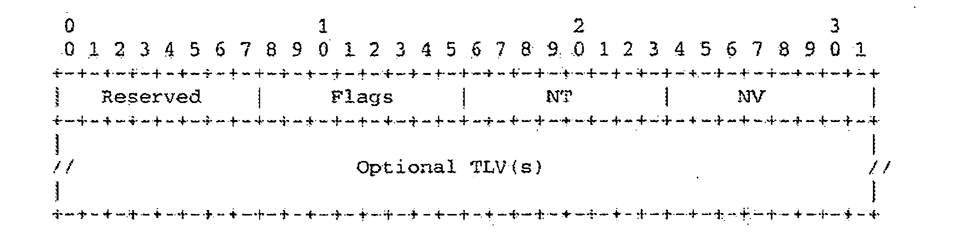

It contains 8 bit for a Notification Type (NT), which specifies the class of notification, and 8 bit for a Notification Value (NV), which provides addition information related to the nature of the notification, followed by a number of optional TLV (Type, Length, Value) fields.

In the preferred embodiment, a specific value ("ERO path usage") exists for the Notification Type (NT) field to identify that the NOTIFICATION object relates the usage status of one ERO given in a PCErep message by the PGE to the PCC in response of a PCEreq. The value of the NV field will specify if the ERO is used or not. Two possible value are: "YES/ERO applied" or "NO/ERO not applied". A TLV named ERO is therefore included in the NOTIFICATION object that specifies the related path.

Optionally, as a further improvement, a TLV named REASON may be included in the NOTIFICATION object if the value of the NV field is "Not Established" that specifies the reason why the proposed path has not been established.

Through the information about the usage of the computed path, the PCEs can improve with a higher precision the states of the network, Implementation of a stateful PCE is hence simplified. The blocking probability will be lower when paths are computed by a stateful PCE rather than by a stateless PCE.

According to known path computation models, the PCE is informed of the path set-up by analysing OSPF-TE messages to determine the network resource availabilities. A PCE can then compare this new information with the previous its computed and proposed routes to find out the "chance of success" of its proposed routes and, if necessary change its behavior.

The introduction of a direct acknowledgement from the PCC to the PCE reduces the computational effort in the PCE. Moreover, it has no impact on the control plane messages and does not increase the complexity of the control plane.

The optional reason can further improve the computation. On the other hand, a simple "No" value can also be used by a PCC, for example, if this PCC had requested the same path computation to several PCEs and then choose only one of them among all the responses path for the signaling. Then the PCC can send to the non chosen PCEs the notification message with the ERO usage object with a "No" value. In such case the PCC has no reason to justify its choice to the PCEs.

In the exemplary embodiment of figures 1 and 2, a network architecture with only a single PCEs is shown, It will be appreciated by a skilled person that the present invention is by no means limited to such an architecture. Various other PCE architectures can be devised, as explained in detail in Section 5 of RFC 4655.

While for the sake of simplicity only node N1 is shown in figures 1 and 2 with a PCC function, this is not necessarily the case, and the present invention also encompasses other architectures where multiple or all network elements have a PCC function.

Figure 3 shows a detailed schematic diagram of a Path Computing Element (PCE) in accordance with the present invention and comprised in the data network of Fig. 1. PCE 31 has a control plane signaling engine 32 for receiving link state information from other entities in the network via control plane messages using an IGP such as OSPF-TE. PCE 31 stores the link state information in a Traffic Engineering Database (TED) 34. Furthermore, PCE 31 comprises processing means 33 for computing network paths based on the link state information stored in the TED 34. An interface 35 serves for the communication with a PCC using PCEP.

Path computation requests are received at interface 35 and transferred to processor 33, which computes a path corresponding to the request. The result is transferred back by interface 35 to the PCC. According to the invention PCC then sends back an acknowledgement indicating whether the proposed path has been used or not. This acknowledgement is also received at interface 35, transferred to processor 33, and stored as status information in TED 34. Alternatively, link state information derived from acknowledgements can also be stored in an extra memory rather than in a TED.

Fig. 4 shows a schematic block diagram of a network element in accordance with the present invention. As already mentioned above, network element N1, here generally depicted as network element 40, comprise signaling engine 41 including first means 42 and second means 43. The first means 42 is devised for generating messages to inform other network elements in data network NET (Fig. 1) in case of a particular link reaching a respective predefined filling capacity or in case of a detected link failure. As will be appreciated by those skilled in the art, the above-mentioned functionality of said first means 42 corresponds to a functionality of standard Resource reSerVation Protocol-Traffic Engineering (RSVP-TE), which is one of the most important signaling protocols in the internet protocol suite.

As further known to a person skilled in the art, RSVP includes sending a special message from a sender in a data network to a receiver, which message is called an RSVP Path Message. This type of message is employed for detecting a possible path from the sender to the receiver. Passed routers are logged and notified to the receiver. Along the path, the receiver sends a further message called RSVP Reservation Message. Routers along the path reserve resources according to the specification comprised in the RSVP Reservation Message or send back an error message. If the RSVP Reservation Message reaches the sender, the latter may rely on the reservations and establish the LSP.

The second means 43 is a PCEP interface which serves for communication with a PCE. When a new path has to be established, network element 40 sends at PCEP interface 43 a path computation request to an associated PCE. When the PCE has computed a path, a proposal for the path will be received at interface 43. According to the invention, when the path is established, network element 40 sends at interface 43 an acknowledgment indicating whether the path uses the route proposed by the PCE or not and optionally a reason why the proposed path was not used.

As will be appreciated those skilled in the art, the present invention is not necessarily limited to the use of the OSPF routing protocol: any other future standard protocol which is able to gather network information for the PCEs can be employed instead. Furthermore, the present invention is not limited to the use of existing RSVP messages for notifying the PCEs. As an alternative, Path Computation Element (PCE) Communication Protocol (PCEP) could be employed (as disclosed, e.g., at http://www.ietf.org/internet-drafts/draft-ietf-pce-pcep-02.txt). In this case, however, a PCC should exist on the node that wishes to advertise.

## Claims

1. A method of computing a path (P) in a label switched network (NET), comprising the steps of:
- storing in a traffic engineering database (34) topology and resource information about said label switched network (NET);
- receiving at a stateful path computing element (PCE1) a path computation request (REQ) from a path computation client (PCC1);
- computing a path (P) serving said path computation request (REQ) using said topology and resource information; and
- transmitting a path computation reply (PCR) including said computed path (P) to said path computation client (PCC1);
**characterized in that**
said path computation client (PCC1) returns to said path computing element (PCE1) an acknowledgment (ACK) indicating whether said computed path (P) has been used by said path computation client (PCC1) to set up a label switched path or not.

2. A method according to claim 1, wherein the acknowledgment (ACK) is based on the Path Computation Element communication Protocol used for communication between said path computing element (PCE1) and said path computation client (PCC1).

3. A method according to claim 2, wherein said Path Computation Element communication Protocol is enhanced by a notification message to be used as said acknowledgment (ACK).

4. A method according to claim 3, wherein said notification message contains an Request Parameters object to refer to a particular path computation request (REQ).

5. A method according to claim 3, wherein a new NOTIFICATION object is defined for said notification.

6. A method according to claim 5, wherein the new NOTIFICATION object is defined using a standardized NOTIFICATION object structure and defines a Notification-type, which specifies the class of notification called herein "ERO path usage" and two Notification-values indicating the nature of the notification using one of the values "YES/ERO applied" or "NO/ERO not applied".

7. A method according to claim 6, wherein the NOTIFICATION object further contains an field indicating a reason why the proposed path has not been established.

8. A stateful Path Computing Element (PCE1 31) for use in a label switched network (NET) comprising:
- a traffic engineering database (34) for storing topology and resource information about said label switched network (NET);
- interface means (35) for communication with at least one path computation client (PCC1);
- processing means (33) for computing upon receipt of a path computation request (REQ) from a path computation client (PCC1) a path (P) serving said path computation request (REQ) using said topology and resource information;
**characterized in that**
said interface means (35) are adapted to receive from said path computation client (PCC1) an acknowledgment (ACK) indicating whether a proposed previously computed path (P) has been used by said path computation client (PCC1) to set up a label switched path or not and **in that** said processing means (33) are adapted to take link state information communicated by said acknowledgment (ACK) into account for future path computations.

9. A path computation client (PCC1; 40) for use in a label switched network (NET) comprising a first interface means (42) for communicating with network elements (n1-n9, N2) in said network (NET) to establish label switched paths and a second interface means (43) for communicating with a path computing element (PCE1), wherein said second interface means (43) is adapted to transmit to said path computing element (PCE1) a path computation request (REQ) and to receive from said path computing element (PCE1) a path computation reply (PCR) including a proposal for a path (P) to be established;
**characterized in that**
said second interface means (43) is further adapted to return to said path computing element (PCE1) an acknowledgment (ACK) indicating whether said proposed path (P) has been used by said path computation client (PCC1) to set up a label switched path or not.

## Patentansprüche

1. Ein Verfahren zum Berechnen eines Pfads (P) In einem etikettenvermittelten Netzwerk (NET), welches die folgenden Schritte umfasst:
- Speichern von Informationen in Bezug auf die Topologie und Ressourcen des besagten etikettenvermittelten Netzwerks (NET) in einer verkehrstechnischen Datenbank (34);
- Empfangen einer Pfadberechnungsanforderung (REQ) von einem Pfadberechnungs-Client (PCC1) an einem zustandsbehafteten Pfadberechnungselement (PCE1);
- Berechnen eines Pfads (P) in Antwort auf die besagte Berechnungsanforderung (REQ) unter Verwendung der besagten Informationen in Bezug auf die Topologie und Ressourcen; und
- Übertragen der Pfadberechnungsantwort (PCR), welche den besagten berechneten Pfad (P) enthält, an den besagten Pfadberechnungs-Client (PCC1);
**dadurch gekennzeichnet, dass**
der besagte Pfadberechnungs-Client (PCC1) eine Rückmeldung (ACK) an das besagte Pfadberechnungselement (PEC1) sendet, in welcher angegeben wird, ob der besagte berechnete Pfad (P) von dem besagten Pfadberechnungs-Client (PCC1) verwendet wurde, um einen etikettenvermittelten Pfad aufzubauen, oder nicht.

2. Ein Verfahren nach Anspruch 1, wobei die Rückmeldung (ACK) auf dem für die Kommunikation zwischen dem besagten Pfadberechnungselement (PCE1) und dem besagten Pfadberechnungs-Client (PCC1) verwendeten Kommunikationsprotokoll des Pfadberechnungselements basiert.

3. Ein Verfahren nach Anspruch 2, wobei das besagte Kommunikationsprotokoll des Pfadberechnungselements von einer Benachrichtigung, welche als die besagte Rückmeldung (ACK) zu verwenden ist, gestützt wird.

4. Ein Verfahren nach Anspruch 3, wobei die besagte Benachrichtigung ein Anforderungsparameter-Objekt enthält, welches sich auf eine bestimmte Pfadberechnungsanforderung (REQ) bezieht.

5. Ein Verfahren nach Anspruch 3, wobei für die besagte Benachrichtigung ein neues BENACHRICHTIGUNGS-Objekt definiert wird.

6. Ein Verfahren nach Anspruch 5, wobei das neue BENACHRICHTIGUNGS-Objekt unter Verwendung einer standardisierten BENACHRICHTIGUNGS-Objekt-Struktur definiert wird und einen Benachrichtigungstyp definiert, welcher die Benachrichtigungsklasse, hierin "ERO-Pfadnutzung" genannt, und zwei Benachrichtigungswerte, welche die Natur der Benachrichtigung unter Verwendung eines der Werte "JA/ERO angewendet" oder "NEIN/ERO nicht angewendet" angeben, spezifiziert.

7. Ein Verfahren nach Anspruch 6, wobei das BENACHRICHTIGUNGS-Objekt weiterhin ein Feld enthält, in welchem der Grund, aus welchem der vorgeschlagene Pfad nicht aufgebaut worden ist, angegeben wird.

8. Ein zustandsbehaftetes Pfadberechnungselement (PCE1, 31) zur Verwendung in einem etikettenvermittelten Netzwerk (NET), umfassend:
- Eine verkehrstechnische Datenbank (34) zum Speichern von Informationen in Bezug auf die Topologie und Ressourcen des besagten etikettenvermittelten Netzwerks (NET);
- Schnittstellenmittel (35) für die Kommunikation mit mindestens einem Pfadberechnungs-Client (PCC1);
- Verarbeitungsmittel (33) zum Berechnen, im Anschluss an den Empfang einer Pfadberechnungsanforderung (REQ) von einem Pfadberechnungs-Client (PCC1), eines Pfads (P) gemäß der besagten Pfadberechnungsanforderung (REQ) unter Verwendung der besagten Informationen in Bezug auf die Topologie und Ressourcen;
**dadurch gekennzeichnet, dass**
die besagten Schnittstellenmittel (35) dazu ausgelegt sind, von dem besagten Pfadberechnungs-Client (PCC1) eine Rückmeldung (ACK) zu empfangen, in welcher angegeben wird, ob ein vorgeschlagener, zuvor berechneter Pfad (P) von dem besagten Pfadberechnungs-Client (PCC1) verwendet wurde, um einen etikettenvermittelten Pfad aufzubauen, oder nicht, und dass die besagten Verarbeitungsmittel (33) dazu ausgelegt sind, Verbindungszustandsinformationen, welche in der besagte Rückmeldung (ACK) übermittelt wurden, für zukünftige Pfadberechnungen zu berücksichtigen.

9. Ein Pfadberechnungs-Client (PCC1; 40) zur Verwendung in einem etikettenvermittelten Netzwerk (NET), umfassend ein erstes Schnittstellenmittel (42) für die Kommunikation mit Netzwerkelementen (n1-n9, N2) in dem besagten Netzwerk (NET) zum Aufbau von etikettenvermittelten Pfaden, und ein zweites Schnittstellenmittel (43) für die Kommunikation mit einem Pfadberechnungselement (PCE1), wobei das besagte zweite Schnittstellenmittel (43) dazu ausgelegt ist, eine Pfadberechnungsanforderung (REQ) an das besagte Pfadberechnungselement (PCE) zu senden und von dem besagten Pfadberechnungselement (PCE1) eine Pfadberechnungsantwort (PCR), welche einen Vorschlag für einen aufzubauenden Pfad (P) enthält, zu empfangen;
**dadurch gekennzeichnet, dass**
das besagte zweite Schnittstellenmittel (43) weiterhin dazu ausgelegt ist, eine Rückmeldung (ACK) an das besagte Pfadberechnungselement (PCE1) zu senden, in welcher angegeben wird, ob ein vorgeschlagener Pfad (P) von dem besagten Pfadberechnungs-Client (PCC1) verwendet wurde, um einen etikettenvermittelten Pfad aufzubauen, oder nicht.

## Revendications

1. Procédé de calcul d'un chemin (P) dans un réseau à commutation d'étiquettes (NET), comprenant les étapes suivantes :
- stocker dans une base de données technique de trafic (34) les informations de topologie et de ressources dudit réseau à commutation d'étiquettes (NET) ;
- recevoir sur un élément dynamique de calcul de chemin (PCE1) une demande de calcul de chemin (REQ) en provenance d'un client de calcul de chemin (PCC1) ;
- calculer un chemin (P) répondant à ladite demande de calcul (REQ) en utilisant lesdites informations de topologie et de ressources ; et
- transmettre une réponse de calcul de chemin (PCR) comprenant ledit chemin calculé (P) audit client de calcul de chemin (PCC1) ;
**caractérisé en ce que**
ledit client de calcul de chemin (PCC1) renvoie audit élément de calcul de chemin (PEC1) un accusé de réception (ACK) indiquant si ledit chemin calculé (P) a été utilisé ou non par ledit client de calcul de chemin (PCC1) pour établir un chemin à commutation d'étiquettes.

2. Procédé selon la revendication 1, dans lequel l'accusé de réception (ACK) est basé sur le protocole de communication d'élément de calcul de chemin utilisé pour la communication entre ledit élément de calcul de chemin (PCE1) et ledit client de calcul de chemin (PGC1).

3. Procédé selon la revendication 2, dans lequel ledit protocole de communication d'élément de calcul de chemin est amélioré par un message de notification à utiliser en tant que dit accusé de réception (ACK).

4. Procédé selon la revendication 3, dans lequel ledit message de notification contient un objet Paramètres de demande pour se référer à une demande particulière de calcul de chemin (REQ).

5. Procédé selon la revendication 3, dans lequel un nouvel objet NOTIFICATION est défini pour ladite notification.

6. Procédé selon la revendication 5, dans lequel le nouvel objet NOTIFICATION est défini en utilisant une structure d'objets NOTIFICATION normalisée et définit un type de notification qui spécifie la classe de notification appelée ici « utilisation chemin ERO » et deux valeurs de notification indiquant la nature de la notification en utilisant l'une des valeurs « OUI/ERO appliqué » ou « NON/ERO non appliqué ».

7. Procédé selon la revendication 6, dans lequel l'objet NOTIFICATION contient en outre un champ indiquant une raison pour laquelle le chemin proposé n'a pas été établi.

8. Élément dynamique de calcul de chemin (PCE1, 31) à utiliser dans un réseau à commutation d'étiquettes (NET) comprenant :
- base de données technique de trafic (34) pour stocker les informations de topologie et de ressources dudit réseau à commutation d'étiquettes (NET) ;
- moyens d'interface (35) pour communiquer avec au moins un client de calcul de chemin (PCC1) ;
- moyens de traitement (33) pour calculer, suite à la réception d'une demande de calcul de chemin (REQ) en provenance d'un client de calcul de chemin (PCC1), un chemin (P) répondant à ladite demande de calcul de chemin (REQ) en utilisant lesdites informations de topologie et de ressources ;
**caractérisé en ce que**
lesdits moyens d'interface (35) sont adaptés pour recevoir depuis ledit client de calcul de chemin (PCC1) un accusé de réception (ACK) indiquant si un chemin proposé précédemment et calculé (P) a été utilisé ou non par ledit client de calcul de chemin (PCC1) pour établir un chemin à commutation d'étiquettes et **en ce que** les moyens de traitement (33) sont adaptés pour prendre en compte les informations d'état de liaison communiquées par ledit accusé de réception (ACK) pour les futurs calculs de chemin.

9. Client de calcul de chemin (PCC1 ; 40) à utiliser dans un réseau à commutation d'étiquettes (NET) comprenant des premiers moyens d'interface (42) pour communiquer avec les éléments de réseau (n1-n9, N2) dans ledit réseau (NET) afin d'établir des chemins à commutation d'étiquettes et des seconds moyens d'interface (43) pour communiquer avec un élément de calcul de chemin (PCE1), dans lequel lesdits seconds moyens d'interface (43) sont adaptés pour transmettre audit élément de calcul de chemin (PCE1) une demande de calcul de chemin (REQ) et pour recevoir depuis ledit élément de calcul de chemin (PCE1) une réponse de calcul de chemin (PCR) comprenant une proposition d'un chemin (P) à établir ;
**caractérisé en ce que**
lesdits seconds moyens d'interface (43) sont en outre adaptés pour renvoyer audit élément de calcul de chemin (PCE1) un accusé de réception (ACK) indiquant si ledit chemin proposé (P) a été utilisé ou non par ledit client de calcul de chemin (PCC1) pour établir un chemin à commutation d'étiquettes.
